# FASCICULE DE BREVET EUROPEEN

(11) **EP 1 352 324 B1**
(45) Date de publication et mention de la délivrance du brevet: **14.07.2004**
(21) Numéro de dépôt: 01989646.3
(22) Date de dépôt: 20.12.2001
(51) Int. Cl.: G06F 11/16, G06F 1/12

(54) **DISPOSITIF DE SYNCHRONISATION TOLERANT AUX PANNES POUR RESEAU INFORMATIQUE TEMPS REEL**
FEHLERTOLERANTE SYNCHRONISATIONSEINRICHTUNG FÜR EIN ECHTZEIT-COMPUTERNETZWERK
FAULT-TOLERANT SYNCHRONISATION DEVICE FOR A REAL-TIME COMPUTER NETWORK

(30) Priorité: 16.01.2001 FR 0100542
(43) Date de publication de la demande: 15.10.2003
(73) Titulaire: Thales, 75008 Paris (FR)
(72) Inventeur: TOILLON, Patrice, Thales Intellectual Property, F-94117 Arcueil CEDEX (FR); COLAS, Gérard, Thales Intellectual Property, F-94117 Arcueil CEDEX (FR)
(74) Mandataire: Nguyen Van Yen, Christian
(86) Numéro de dépôt international: PCT/FR2001/004119
(87) Numéro de publication internationale: WO 2002/056176

(56) Documents cités:
- WO-A-00/16223
- WO-A-97/43712
- US-B1- 6 173 416

## Description

La présente invention appartient au domaine des matériels et logiciels pour réseaux informatiques temps réel à tolérance de pannes. Plus spécifiquement, elle concerne la synchronisation des équipements raccordés audit réseau.

Le problème à résoudre est la mise en phase sans défaillance des horloges temps réel d'équipements de traitement connectés par un ou plusieurs réseaux de transfert de données. Le fait qu'une solution sûre soit apportée à ce problème est particulièrement important pour la latence des données dans le cas des équipements embarqués sur aéronefs, notamment ceux qui remplissent les fonctions d'alarme, de pilote automatique, de gestion des plans de vol, de maintenance ou de service.

L'état de l'art en la matière est constitué par les brevets US 5,307,409, 5,343,414, 5,386,424 et 5,557,623. Ces systèmes ont en outre fait l'objet d'une norme ARINC 659 (27 décembre 1993) correspondant à un système de transfert de données par bus "Fond de panier".

Les inconvénients de cet état de l'art sont essentiellement la distance courte sur laquelle une synchronisation sûre est possible (environ un mètre en raison de la nécessité d'une référence de masse commune à tous les abonnés) et l'absence de versatilité du système, tous les équipements devant être synchronisés, le bus de fond de panier assurant à la fois le transfert des données et des signaux de synchronisation.

Le dispositif selon l'invention permet de réaliser une synchronisation sûre sur quelques dizaines de mètres et autorise le choix d'inclure ou pas dans la synchronisation n'importe lequel des équipements connectés au réseau en séparant le transfert des données et le bus de synchronisation des équipements. Cette synchronisation est moins précise que celle de la norme ARINC 659, mais elle permet d'utiliser des transferts de données par réseau à haut débit sur des distances plus importantes.

A ces fins, l'invention propose un dispositif de synchronisation des horloges temps réel locales d'équipement informatiques reliés à un bus de transfert de données comprenant des circuits de synchronisation électroniques pour générer des impulsions de synchronisation, des circuits de comptage pour générer l'horloge temps réel locale et échanger les impulsions avec d'autres dispositifs de synchronisation, des circuits de vote temporel pour resynchroniser les circuits de comptage,
**caractérisé en ce que** les impulsions de synchronisation sont transportées par un bus spécifique de synchronisation.

A ces fins l'invention propose également un procédé de synchronisation selon la reventication 11 ainsi qu'un équipement informatique selon la revendication 10, cette dernière concernant l'application du dispositif de synchronisation d'une des revendications de dispositif à un équipement informatique.

L'invention sera mieux comprise, et ses différentes caractéristiques et avantages ressortiront de la description qui suit d'un exemple de réalisation, et de ses figures annexées dont :
- la figure 1 montre l'architecture de la plate-forme de synchronisation selon l'invention ;
- la figure 2 montre le principe sur lequel repose la mise en oeuvre de la synchronisation par l'invention ;
- la figure 3 montre un mode de réalisation du dispositif selon l'invention ;
- la figure 4 expose le schéma de vote permettant de foumir une horloge temps réel synchronisée et sûre selon l'invention ;
- la figure 5 expose le schéma de codage permettant d'entrelacer différents modes de synchronisation ;
- La figure 6 représente certains états du dispositif selon l'invention en fonctionnement.

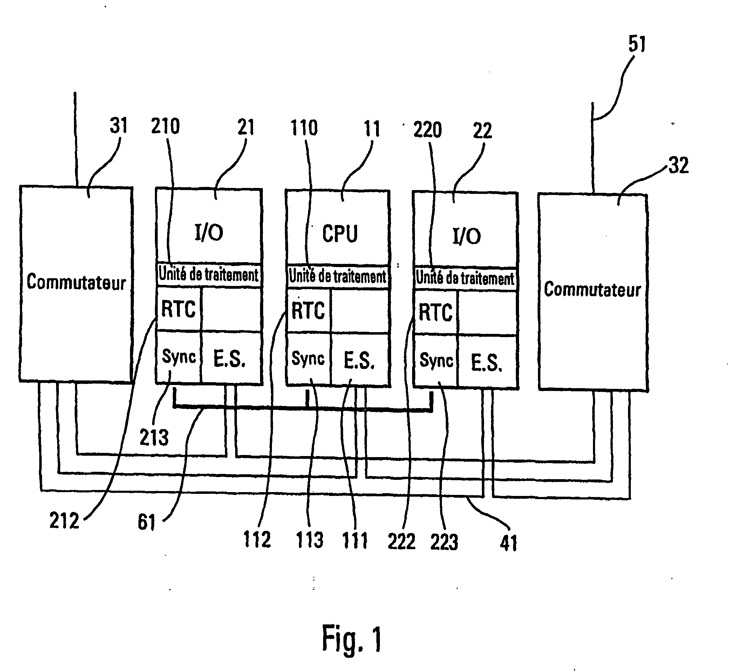

La plate-forme informatique de la figure 1 comporte au moins une unité centrale ou « CPU » (11), plusieurs unités d'entrée/sortie ou «I/O» (21, 22), des commutateurs ou « cabinet switch » (31, 32). Ces équipements sont connectés entre eux par un réseau de données duplex (41) par exemple de type Ethemet 100MHz Full Duplex. La plate-forme représentée est connectée à d'autres différentes plates-formes par l'intermédiaire des commutateurs (31, 32) et du bus (51).

Les unités centrales et de traitement (11, 21, 22) comportent chacune un système de traitement proprement dit (110) où s'effectuent les traitements spécifiques de l'unité et le contrôle du réseau de données via le « End System » ou « ES » (111), une horloge temps réel ou « RTC » (112) et l'entité de synchronisation ou « Sync » (113, 213, 223) selon l'invention.

Les entités de synchronisation (113, 213, 223) sont reliées entre elles par un bus de synchronisation spécifique (61) distinct de la liaison de données (41), sur lequel des indications sur des modes de réalisations spécifiques sont fournies plus loin dans la description.

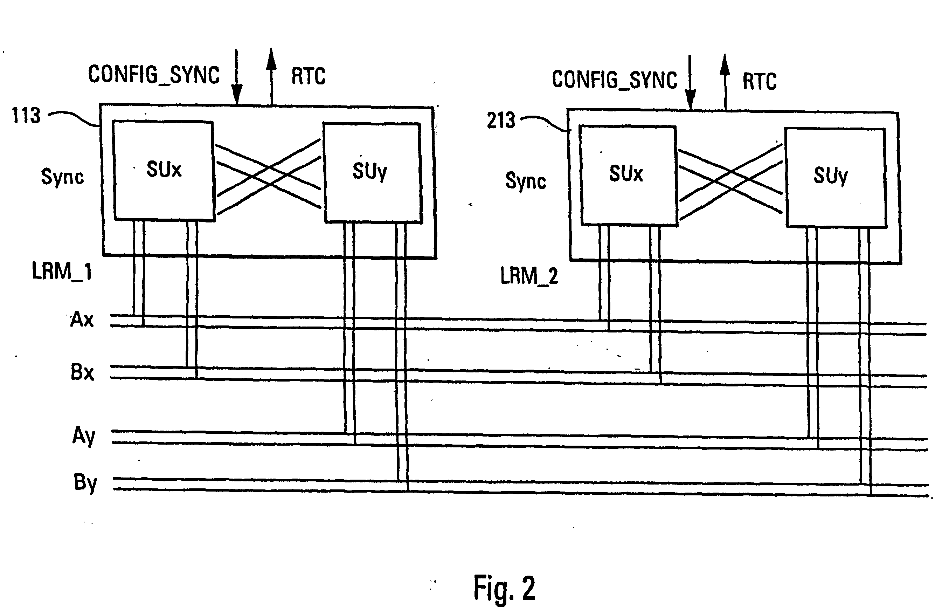

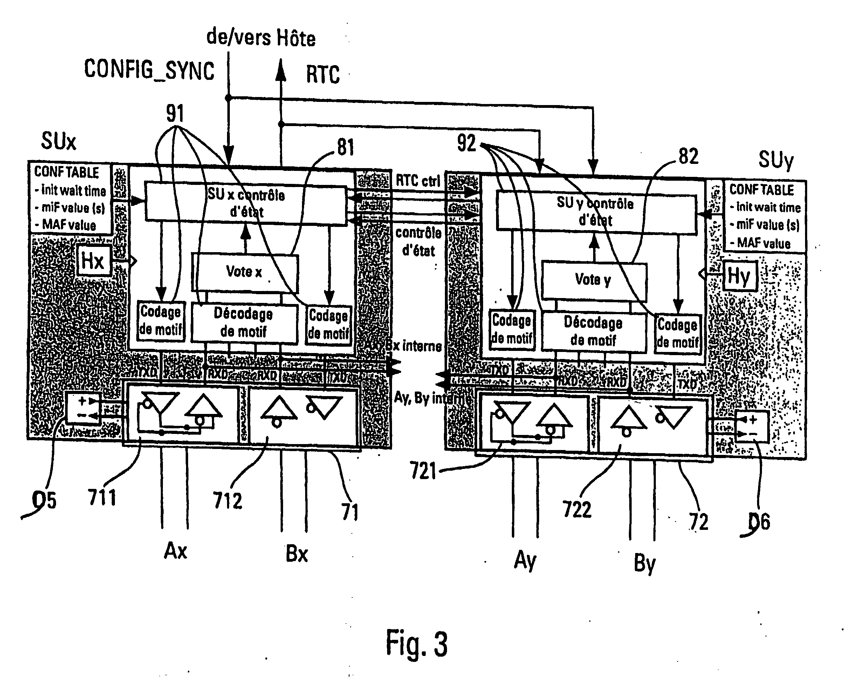

Les entités de synchronisation (113, 213) sont chacune composées de deux unités redondantes SUₓ et SU_{y} (Figure 2). Chaque unité SUₓ, SU_{y} comporte un oscillateur local Hₓ, H_{y} (Figure 3), une table de configuration CONF TABLE avec une valeur de temps d'attente d'initialisation « init wait time », au moins une première valeur de période de synchronisation « miF value (s) » et une deuxième valeur de période de synchronisation « MAF value » pour décrire le séquencement cyclique de la plate-forme sous la forme « Minor frame/Major Frame » de manière à phaser les différents cycles de traitement des équipements CPU (11) et I/O (21, 22) pour diminuer la latence des transferts de données échangées selon le numéro de cycle. Les unités redondantes SUₓ, SU_{y} sont reliées directement entre elles de manière à échanger des signaux de contrôle de l'horloge temps réel locale « RTC ctrl » et des signaux de contrôle d'état « state ctrl ».

Chaque unité de synchonisation SUₓ, SU_{y} reçoit de son processeur de traitement local (110, 210, 220) un signal de configuration de synchronisation CONFIG_SYNC et renvoie un signal d'horloge temps réel RTC.

Chaque unité de synchronisation SUₓ, (resp SU_{y}) envoie sur le bus spécifique de synchronisation (61) deux signaux Aₓ, Bₓ (resp A_{y}, B_{y}) et reçoit quatre signaux Aₓ, Bₓ, A_{y}, B_{y}.

Chaque unité de synchronisation Suₓ, Su_{y} comporte avantageusement des circuits spécifiques (711, 712) pour la relier au bus spécifique de synchronisation (61).

De préférence, ces circuits spécifiques (711, 712, 721, 722) seront des «drivers» différentiel bidirectionnel du bus CAN (« controller area network ») conforme aux spécifications de la norme ISO 11 898 (numéro de référence ISO 11 898 : 1993 (E) ), document auquel on se reportera si nécessaire pour comprendre le fonctionnement du CAN. Ces circuits sont notamment utilisés dans des réseaux locaux d'échanges de données à haute vitesse pour véhicule automobile. Un exemple de circuit de ce type est le « driver » de référence PCA 82 C 250 de la Société Philips Semiconductors (référence : Data Sheet du 21 octobre 1997).

Ces circuits sont particulièrement avantageux en raison des propriétés des états « récessifs » et « dominants » sur la liaison différentielle qui sont utilisés par l'invention pour réaliser un OU câblé entre plusieurs émetteurs sans référence de masse commune sur plusieurs dizaines de mètres (cette propriété est utilisée dans la norme CAN pour réaliser l'arbitrage de prise de bus entre les différents terminaux). Chaque paire de circuits (71, 72) pourra donc être connectée séparément à une alimentation (95, 96) spécifique de l'équipement et isolée galvaniquement des autres équipements de la plateforme.

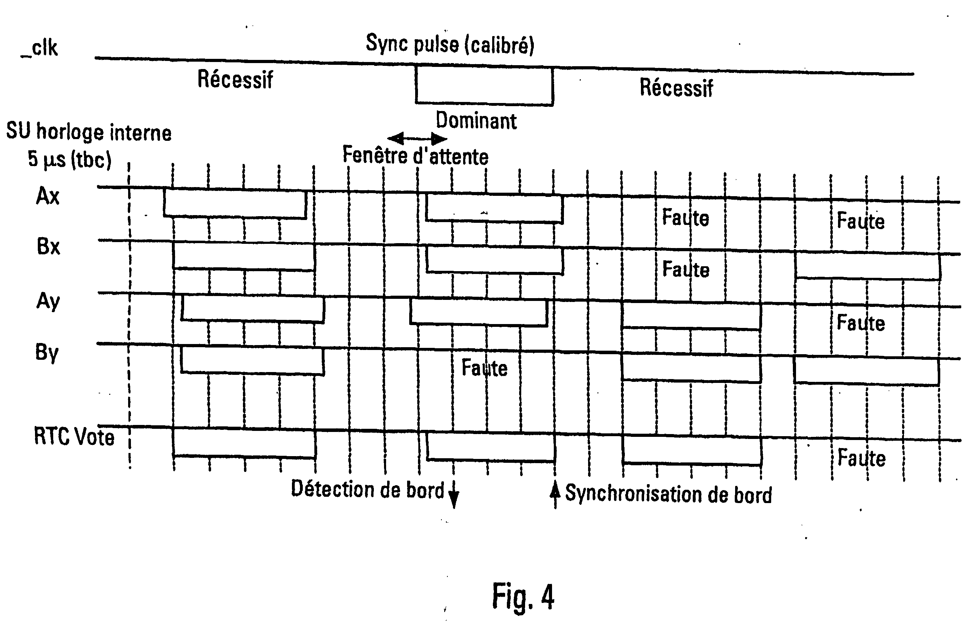

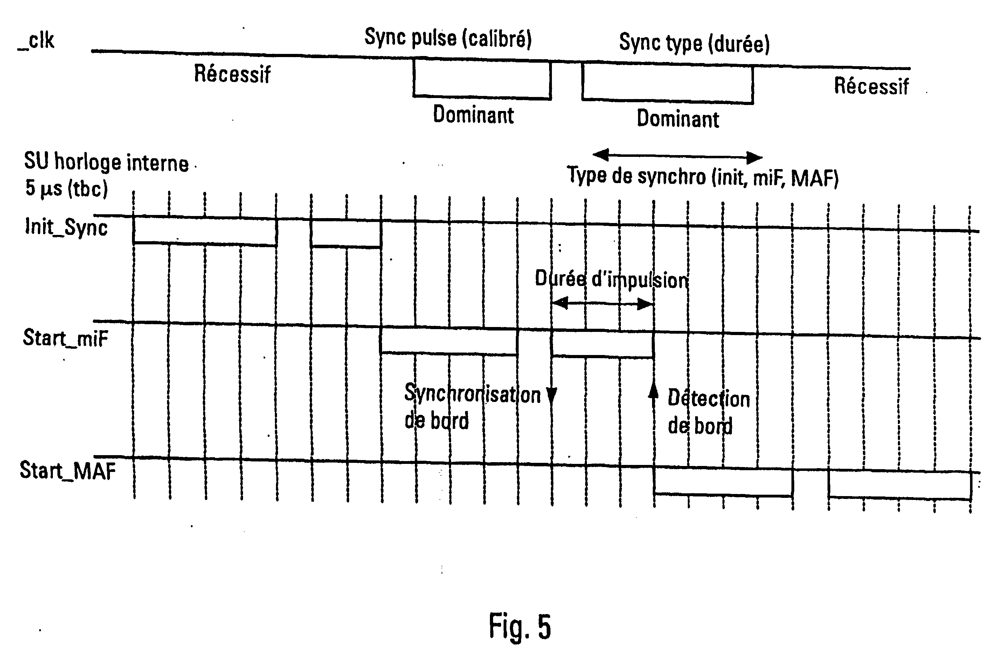

Sur la figure 4, la séquence de synchronisation des canaux Aₓ, Bₓ, A_{y}, B_{y} de type « _clk » utilise l'oscillateur local Hₓ, H_{y} de chaque unité de synchronisation SUₓ, SU_{y}. La séquence comprend une impulsion de synchronisation calibrée « Sync pulse (calibrated) » pour rephaser l'horloge temps réel locale RTC et une impulsion de type de synchronisation « Sync type (duration) » pour indiquer le type de cycle plate-forme (minor-frame /major frame) (Figure 5).

Chaque impulsion de synchronisation comporte une partie récessive et une partie dominante. A partir de l'état récessif, le signal de type « _clk » est mis dans l'état dominant pendant quelques périodes de l'oscillateur local, puis il est placé dans l'état récessif. La durée de cet état dominant dépend du type d'impulsion.

L'oscillateur local Hₓ, (resp H_{y}) a une période de 5 µs environ. L'impulsion calibrée est générée par l'unité Suₓ (resp Su_{y}) sur ses propres signaux Aₓ, Bₓ, (resp A_{y}, B_{y}). Chaque unité relit les quatre canaux Aₓ, Bₓ, A_{y}, By. A partir de l'état courant des signaux lus sur ces 4 canaux, elle effectue un vote pendant une fenêtre « expected window » d'une durée de plusieurs périodes de l'oscillateur local. Elle détecte le basculement cohérent des signaux sur les canaux Aₓ, Bₓ, A_{y}, B_{y} dit « Edge detection ». La mise en phase de l'horloge temps réel locale RTC « Edge synchronisation » s'effectue en au moins trois, au plus quatre périodes d'oscillateur après « Edge detection ».

La figure 4 explique comment se combinent les impulsions de synchronisation calibrées générées sur les quatre canaux Aₓ, Bₓ, A_{y}, B_{y} du bus spécifique (61) pour générer un vote « RTC vote » qui prend en compte à la fois les décalages temporels des oscillateurs locaux Hₓ, H_{y} et les défaillances « Fault » de chaque unité de synchronisation SUₓ, SU_{y}.

Le résultat du vote sur les quatre canaux est donné par la formule logique suivante :
RTC vote = (Aₓ or A_{y}) and (Bₓ or A_{y}) and (Aₓ or B_{y}) and (Bₓ or B_{y}).

Ce vote est généralement désigné sous l'appellation de vote majoritaire. Il se différencie d'un vote quadruplex par la suppression des termes (Aₓ or Bₓ) et (A_{y} or B_{y}) provenant d'une seule unité SUx ou SU_{y} qui propagent une faute en cas de défaillance de cette seule unité. La table de décision est donc la suivante :

| Ax | Ay | Bx | By | RTC Vote |
|---|---|---|---|---|
| 1 | 1 | 1 | 1 | 1 |
| 1 | 1 | 1 | Ø | 1 |
| 1 | 1 | Ø | 1 | 1 |
| 1 | 1 | Ø | Ø | Ø |
| 1 | Ø | 1 | 1 | 1 |
| 1 | Ø | 1 | Ø | 1 |
| 1 | Ø | Ø | 1 | Ø |
| 1 | Ø | Ø | Ø | Ø |
| Ø | Ø | 1 | 1 | Ø |
| Ø | Ø | 1 | Ø | Ø |
| Ø | Ø | Ø | 1 | Ø |
| Ø | Ø | Ø | Ø | Ø |
| Ø | 1 | 1 | 1 | 1 |
| Ø | 1 | 1 | Ø | Ø |
| Ø | 1 | Ø | 1 | 1 |
| Ø | 1 | Ø | Ø | Ø |

La précision de l'oscillateur local interne Hₓ, (resp H_{y}) de l'unité de synchronisation SUₓ, (resp SU_{y}) sera choisie meilleure ou égale à 100 ppm de telle sorte que pour une période de synchronisation miF de 50 ms par exemple, la tolérance sur la dérive de l'horloge temps réel locale RTC sera inférieure à une période de l'oscillateur local, c.à.d. 5 µs.

La figure 5 explique la manière dont est codé le type de synchronisation. L'impulsion « Sync type (duration) » suit l'impulsion de synchronisation calibrée. Le code correspond à trois valeurs différentes des durées d'impulsion (par exemple 2, 3 et 4 périodes d'oscillateur local). Les trois valeurs représentent les instructions suivantes :
- Init_Sync :: Démarrer une séquence de synchronisation
- Start_miF :: Démarrer une séquence de type miF
- Start_MAF :: Démarrer une séquence de type MAF

Une séquence miF (minor frame) correspond à une période élémentaire de l'horloge temps réel locale RTC (112) soit quelques dizaines de millisecondes. Une séquence MAF (major frame) correspond à une succession des miF différentes jusqu'à la reprise de la miF initiale. La période de la MAF peut être de plusieurs ordres de grandeur supérieure à miF, par exemple 100 fois, soit quelques secondes. Ces valeurs dépendent des types d'équipements que l'on veut synchroniser, la valeur optimale de MAF devant être ajustée à une valeur déterminée à partir du plus petit commun multiple des miF. Exemple : 100 cycles de miF à 10 ms forment un cycle MAF de 1 s.

Un vote est également effectué sur le type de synchronisation.

Le codage, le décodage, le vote sur le code et le contrôle d'état de l'unité de synchronisation sont effectués par un circuit logique programmable (91, 92).

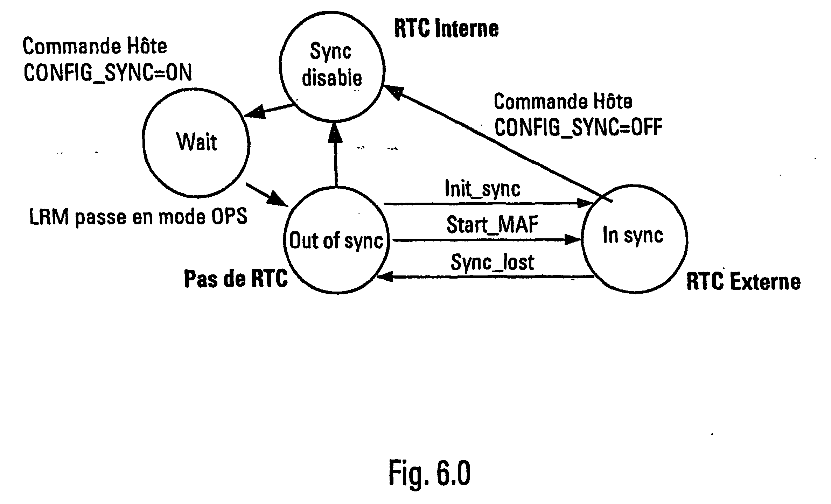

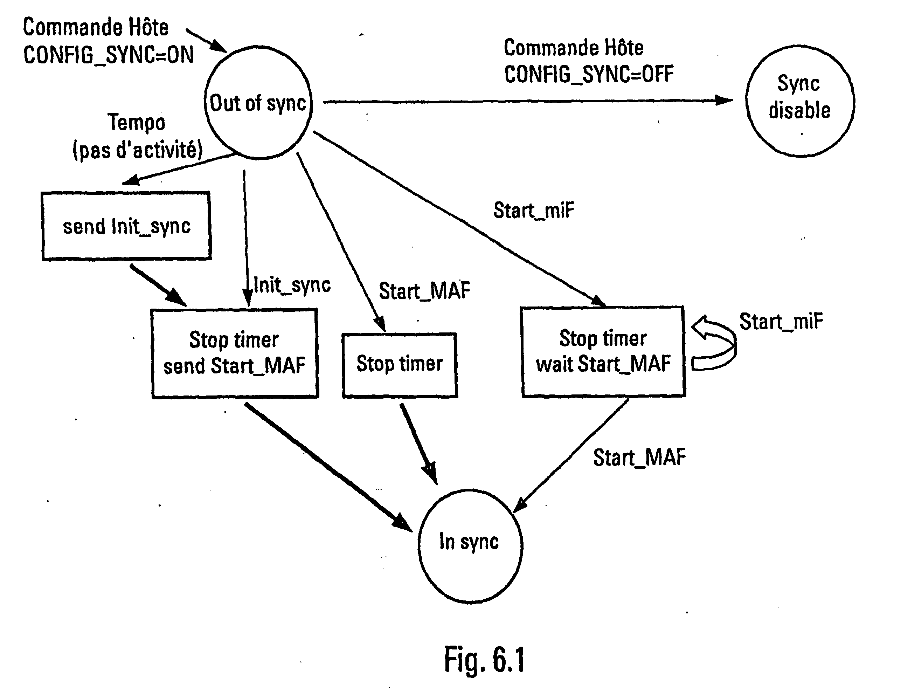

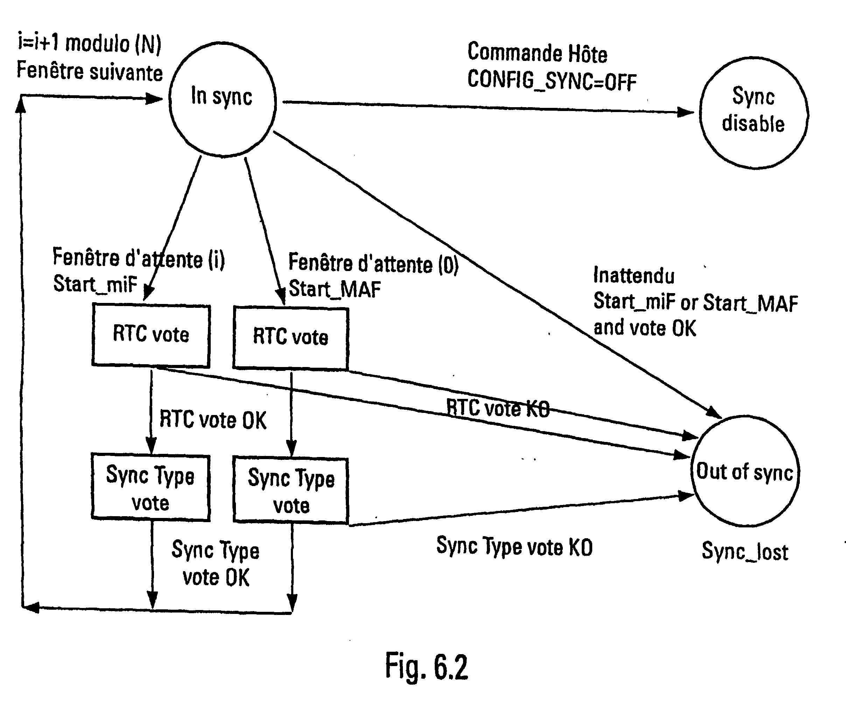

La figure 6 présente les principaux diagrammes de transition d'états.

La figure 6.0 présente une vue générale des transitions entre les états : hors synchronisation « Sync disable », d'attente « Wait », de synchronisation réalisée « In sync » et d'absence de synchronisation « Out of sync ».

Les transitions de/vers l'état « Sync disable » sont déclenchées par des commandes du processeur de traitement local (Host command : CONFIG_SYNC = ON/OFF).

Après une commande CONFIG_SYNC = ON, l'unité de synchronisation SUₓ, SU_{y} passe à l'état « Wait ». L'unité de traitement entre en phase opérationnelle (« LRM entering OPS mode ») se place dans l'état « Out of sync » en attente d'une séquence « Init_sync » ou « Start_MAF ». Une séquence « Init_sync » est envoyée par l'unité de synchronisation si aucune activité n'est détectée avant la fin de la période d'attente.

Une séquence « Start_MAF » est envoyée après la séquence « Init_Sync ». L'une de ces deux séquences déclenche la transition de l'état « Out of sync » à l'état « In sync ».

La figure 6.1 montre de manière plus précise comment s'intègre la dimension temporelle dans cette transition d'état, ainsi que la séquence miF.

La transition de l'état « In sync » à l'état « Out of sync » est déclenchée par la séquence Sync_lost générée si SUₓ, SU_{y} reçoit une impulsion de synchronisation en dehors de la fenêtre « expected window » (RTC vote = Ø) ou s'il y a désaccord sur le type de synchronisation (Sync Type vote = Ø).

La figure 6.2 détaille ces transitions d'état en prenant en compte les deux votes, les deux trames de sychronisation (miF et MAF) et les itérations (i = i + 1 : « next time window »). Le vote sur les types de sychronisation peut être avantageusement du type majoritaire précédent entre les quatre canaux.

Dans un mode de réalisation, le rapport de la période du cycle majeur à celle du cycle mineur est compris entre 2 et 10000.

L'invention n'est pas limitée aux réseaux pour équipements embarqués sur les aéronefs. Elle peut également s'appliquer à des réseaux locaux industriels (RLI) et à des réseaux pour équipements embarqués sur navires.

## Revendications

1. Dispositif de synchronisation (113, 213, 223) des horloges temps réel locales (112, 212, 222) d'équipements informatiques reliés à un bus de transfert de données (41) comprenant des circuits de synchronisation électroniques (711, 712, 721, 722) pour générer des impulsions de synchronisation (Aₓ, Bₓ, A_{y}, B_{y}), des circuits de comptage (91, 92) pour générer l'horloge temps réel locale (112, 212, 222) et échanger les imposions (Aₓ, Bₓ, A_{y}, B_{y}) avec d'autres dispositifs de synchronisation (113, 213, 223), des circuits de vote temporel (81, 82) pour resynchroniser les circuits de comptage (91, 92), **caractérisé en ce que** les impulsions de synchronisation (Aₓ, Bₓ, A_{y}, B_{y}) sont transportées par un bus spécifique de synchronisation (61).

2. Dispositif de synchronisation selon la revendication 1, **caractérisé en ce qu'**il comprend en outre des alimentations (95, 96) indépendantes des autres dispositifs de synchronisation.

3. Dispositif de synchronisation selon l'une des revendications précédentes, **caractérisé en ce que** les échanges des impulsions de synchronisation sur des canaux se font (Ax, Bx, Ay, By) qui sont conformés en impulsion de synchronisation (Sync pulse) et en codage de type de synchronisation (Sync type).

4. Dispositif de synchronisation selon une des revendications précédentes, **caractérisé en ce que** les circuits de synchronsation électroniques (711, 712, 721, 722) génèrent les impulsions de synchronisation (Aₓ, Bₓ, A_{y}, B_{y}) sur des lignes différentielles à états dominant et récessif.

5. Dispositif de synchronisation selon la revendication 4, **caractérisé en ce que** les circuits de synchronisation électroniques (711, 712, 721, 722) sont du type driver bidirectionnel de réseau CAN.

6. Dispositif de synchronisation selon une des revendications précédentes, **caractérisé en ce que** le vote temporel des impulsions de synchronisation (Aₓ, Bₓ, A_{y}, B_{y}) dans les circuits logiques (81, 82) est un vote majoritaire quadruplex en éliminant les paires d'impulsion de synchronisation (Aₓ or Bₓ) et (A_{y} or B_{y}) provenant du même dispositif de synchronisation (SUₓ, SU_{y}, 711, 712, 721, 722).

7. Dispositif de synchronisation selon l'une des revendications précédentes, **caractérisé en ce que** la synchronisation des équipements de la plate-forme informatique est réalisée sous forme de cycles mineur et majeur de périodes multiples.

8. Dispositif de synchronisation selon la revendication précédente, **caractérisé en ce que** le rapport de la période du cycle majeur à celle du cycle mineur est compris entre 2 et 10000.

9. Dispositif de synchronisation selon l'une des revendications précédentes, **caractérisé en ce que** un équipement (11,21,22) peut être mis ou non en synchronisation sans perturber les autres équipements de la plateforme qui sont déjà synchronisés entre eux.

10. Equipement informatique comprenant un dispositif de synchronisation selon l'une des revendications précédentes.

11. Procédé de synchronisation des horloges temps réel locales (112, 212, 222) d'équipements informatiques reliés à un bus de transfert de données (41) par impulsions de synchronisation (Ax, Bx, Ay, By), **caractérisé en ce que** lesdites impulsions sont transportées par un bus spécifique de synchronisation (61).

12. Procédé de synchronisation selon la revendication précédente, **caractérisé en ce qu'**il comprend quatre états opérationnel (Sync disable, Wait, Out of sync, In sync).

13. Procédé de synchronisation selon la revendication 12, **caractérisé en ce qu'**une transition de l'état (Out of sync) vers un état (In sync) est déclenchée par l'expiration d'un temps d'attente ou l'envoi d'une séquence d'initialisation de synchronisation (Init sync) ou d'une séquence de synchronisation d'un premier type (Start_miF) ou d'un deuxième type (Start_MAF).

14. Procédé de synchronisation selon la revendication 12, **caractérisé en ce qu'**une transition de l'état (In sync) vers un état (Out of sync) est déclenchée par l'arrivée de séquences de synchronisation inattendues ou par un premier vote négatif sur quatre signaux (Aₓ, Bₓ, A_{y}, B_{y}) ou un deuxième vote négatif sur trois codes (Init_sync, Start_miF, Start_MAF).

15. Procédé de synchronisation selon la revendication 14, **caractérisé en ce que** les premier et deuxième votes sont du même type.

16. Procédé de synchronisation selon la revendication 13 ou la revendication 14, **caractérisé en ce que** les séquences de synchronisation ont un cycle mineur et un cycle majeur de périodes multiples.

17. Procédé de synchronisation selon la revendication 16, **caractérisé en ce que** le rapport de la période du cycle majeur à celle du cycle mineur est compris entre 2 et 10000.

## Claims

1. Device (113, 213, 223) for synchronizing local real-time clocks (112, 212, 222) of computer equipment connected to a data transfer bus (41) comprising electronic synchronization circuits (711, 712, 721, 722) for generating synchronization pulses (Aₓ, Bₓ, A_{y}, B_{y}), counting circuits (91, 92) for generating the local real-time clock (112, 212, 222) and exchanging the pulses (Aₓ, Bₓ, A_{y}, B_{y}) with other synchronization devices (113, 213, 223), time voting circuits (81, 82) for resynchronizing the counting circuits (91, 92), **characterized in that** the synchronization pulses (Aₓ, Bₓ, A_{y}, B_{y}) are conveyed by a specific synchronization bus (61).

2. Synchronization device according to Claim 1, **characterized in that** it further includes power supplies (95, 96) separate from the other synchronization devices.

3. Synchronization device according to either of the preceding claims, **characterized in that** the exchanges of synchronization pulses are carried out on channels (Ax, Bx, Ay, By) which are formed in synchronization pulse (Sync pulse) and in synchronization type coding (Sync type).

4. Synchronization device according to one of the preceding claims, **characterized in that** the electronic synchronization circuits (711, 712, 721, 722) generate the synchronization pulses (Aₓ, Bₓ, A_{y}, B_{y}) on differential lines with dominant and recessive states.

5. Synchronization device according to Claim 4, **characterized in that** the electronic synchronization circuits (711, 712, 721, 722) are of the CAN network bidirectional driver type.

6. Synchronization device according to one of the preceding claims, **characterized in that** the time voting of the synchronization pulses (Aₓ, Bₓ, A_{y}, B_{y}) in the logic circuits (81, 82) is quadruplex majority voting by eliminating the pairs of synchronization pulses (Aₓ or Bₓ) and (A_{y} or B_{y}) originating from the same synchronization device (SUₓ, SU_{y}, 711, 712, 721, 722).

7. Synchronization device according to one of the preceding claims, **characterized in that** the synchronization of the equipment of the computer platform is achieved in the form of minor and major cycles of multiple periods.

8. Synchronization device according to the preceding claim, **characterized in that** the ratio of the major cycle period to that of the minor cycle is between 2 and 10000.

9. Synchronization device according to one of the preceding claims, **characterized in that** a piece of equipment (11, 21, 22) may or may not be placed in synchronization without disrupting the other pieces of equipment of the platform that have already been synchronized with each other.

10. Computer equipment including a synchronization device according to one of the preceding claims.

11. Method of synchronizing the local real-time clocks (112, 212, 222) of computer equipment connected to a data transfer bus (41) by synchronization pulses (Ax, Bx, Ay, By), **characterized in that** said pulses are conveyed by a specific synchronization bus (61).

12. Synchronization method according to the preceding claim, **characterized in that** it comprises four operating states (Sync disable, Wait, Out of sync, In sync).

13. Synchronization method according to Claim 12, **characterized in that** a transition from the (Out of sync) state to an (In sync) state is triggered by the expiration of a waiting time or the sending of a synchronization initialization sequence (Init sync) or of a synchronization sequence of a first type (Start_miF) or of a second type (Start_MAF).

14. Synchronization method according to Claim 12, **characterized in that** a transition from the (In sync) state to an (Out of sync) state is triggered by the arrival of unexpected synchronization sequences or by a first negative vote on four signals (Aₓ, Bₓ, A_{y}, B_{y}) or a second negative vote on three codes (Init_sync, Start_miF, Start_MAF).

15. Synchronization method according to Claim 14, **characterized in that** the first and second votes are of the same type.

16. Synchronization method according to Claim 13 or claim 14, **characterized in that** the synchronization sequences have a minor cycle and a major cycle of multiple periods.

17. The synchronization method according to Claim 16, **characterized in that** the ratio of the major cycle period to that of the minor cycle is between 2 and 10000.

## Patentansprüche

1. Vorrichtung (113, 213, 223) zur Synchronisation von lokalen Echtzeit-Taktgebern (112, 212, 222) von mit einem Datenübertragungsbus (41) verbundenen Datenverarbeitungseinrichtungen, die elektronische Synchronisationsschaltungen (711, 712, 721, 722) zur Erzeugung von Synchronisationsimpulsen (Aₓ, Bₓ, A_{y}, B_{y}), Zählschaltungen (91, 92) zur Erzeugung des lokalen Echtzeit-Taktgebers (112, 212, 222) und zum Austausch der Impulse (Aₓ, Bₓ, A_{y}, B_{y}) mit anderen Synchronisationsvorrichtungen (113, 213, 223), zeitliche Abstimmungsschaltungen (81, 82) zur Resynchronisation der Zählschaltungen (91, 92) aufweist, **dadurch gekennzeichnet, dass** die Synchronisationsimpulse (Aₓ, Bₓ, A_{y}, B_{y}) von einem spezifischen Synchronisationsbus (61) transportiert werden.

2. Synchronisationsvorrichtung nach Anspruch 1, **dadurch gekennzeichnet, dass** sie außerdem von den anderen Synchronisationsvorrichtung unabhängige Stromversorgungen (95, 96) aufweist.

3. Synchronisationsvorrichtung nach einem der vorhergehenden Ansprüche, **dadurch gekennzeichnet, dass** die Austauschvorgänge der Synchronisationsimpulse (Aₓ, Bₓ, A_{y}, B_{y}) auf Kanälen in Form von Synchronisationsimpulsen (Sync pulse) und einer Codierung vom Synchronisationstyp (Sync type) erfolgen.

4. Synchronisationsvorrichtung nach einem der vorhergehenden Ansprüche, **dadurch gekennzeichnet, dass** die elektronischen Synchronisationsschaltungen (711, 712, 721, 722) die Synchronisationsimpulse (Aₓ, Bₓ, A_{y}, B_{y}) auf differentiellen Leitungen mit einem dominanten und einem rezessiven Zustand erzeugen.

5. Synchronisationsvorrichtung nach Anspruch 4, **dadurch gekennzeichnet, dass** die elektronischen Synchronisationsschaltungen (711, 712, 721, 722) vom Typ bidirektionaler Netztreiber CAN sind.

6. Synchronisationsvorrichtung nach einem der vorhergehenden Ansprüche, **dadurch gekennzeichnet, dass** die zeitliche Abstimmung der Synchronisationsimpulse (Aₓ, Bₓ, A_{y}, B_{y}) in den Logikschaltungen (81, 82) eine Hauptquadruplexabstimmung mit Unterdrückung der Synchronisationsimpulspaare (Aₓ or Bₓ) und (A_{y} or B_{y}) ist, die von der gleichen Synchronisationsvorrichtung kommt (SUₓ, SU_{y}, 711, 712, 721, 722).

7. Synchronisationsvorrichtung nach einem der vorhergehenden Ansprüche, **dadurch gekennzeichnet, dass** die Synchronisation der Einrichtungen der Datenverarbeitungsplattform in Form von Neben- und Hauptzyklen von multiplen Perioden durchgeführt wird.

8. Synchronisationsvorrichtung nach dem vorhergehenden Anspruch, **dadurch gekennzeichnet, dass** das Verhältnis der Periode des Hauptzyklus zu derjenigen des Nebenzyklus zwischen 2 und 10000 liegt.

9. Synchronisationsvorrichtung nach einem der vorhergehenden Ansprüche, **dadurch gekennzeichnet, dass** eine Einrichtung (11, 21, 22) synchronisiert werden kann oder nicht, ohne die anderen Einrichtungen der Plattform zu stören, die bereits untereinander synchronisiert sind.

10. Datenverarbeitungseinrichtung mit einer Synchronisationsvorrichtung nach einem der vorhergehenden Ansprüche.

11. Verfahren zur Synchronisation der lokalen Echtzeit-Taktgeber (112, 212, 222) von mit einem Datenübertragungsbus (41) verbundenen Datenverarbeitungseinrichtungen durch Synchronisationsimpulse (Aₓ, Bₓ, A_{y}, B_{y}), gemäß dem die Impulse von einem spezifischen Synchronisationsbus (61) transportiert werden.

12. Synchronisationsverfahren nach dem vorhergehenden Anspruch, **dadurch gekennzeichnet, dass** es vier Betriebszustände (Sync disable, Wait, Out of sync, In sync) aufweist.

13. Synchronisationsverfahren nach Anspruch 12, **dadurch gekennzeichnet, dass** ein Übergang des Zustands (Out of sync) in einen Zustand (In sync) durch den Ablauf einer Wartezeit oder das Senden einer Synchronisationsinitialisierungsfolge (Init sync) oder einer Synchronisationsfolge eines ersten Typs (Start_miF) oder eines zweiten Typs (Start_MAF) ausgelöst wird.

14. Synchronisationsverfahren nach Anspruch 12, **dadurch gekennzeichnet, dass** ein Übergang des Zustands (In sync) in einen Zustand (Out of sync) von der Ankunft von unerwarteten Synchronisationsfolgen oder von einer ersten negativen Abstimmung über vier Signale (Aₓ, Bₓ, A_{y}, B_{y}) oder von einer zweiten negativen Abstimmung über drei Codes (Init_sync, Start_miF, Start_MAF) ausgelöst wird.

15. Synchronisationsverfahren nach Anspruch 14, **dadurch gekennzeichnet, dass** die erste und die zweite Abstimmung vom gleichen Typ sind.

16. Synchronisationsverfahren nach Anspruch 13 oder 14, **dadurch gekennzeichnet, dass** die Synchronisationsfolgen einen Nebenzyklus und einen Hauptzyklus von multiplen Perioden aufweisen.

17. Synchronisationsverfahren nach Anspruch 16, **dadurch gekennzeichnet, dass** das Verhältnis der Periode des Hauptzyklus zu derjenigen des Nebenzyklus zwischen 2 und 10000 liegt.
